Europäisches Patentamt

European Patent Office

Office européen des brevets

(19)

(11) Publication number: **0 085 449**
**B1**

# EUROPEAN PATENT SPECIFICATION

(45) Date of publication of patent specification: **24.06.87**

(51) Int. Cl.⁴: **A 01 C 17/00**

(21) Application number: **83200068.1**

(22) Date of filing: **17.01.83**

(54) A device for spreading granular and/or powdery material.

(30) Priority: **19.01.82 NL 8200177**

(43) Date of publication of application:
**10.08.83 Bulletin 83/32**

(45) Publication of the grant of the patent:
**24.06.87 Bulletin 87/26**

(84) Designated Contracting States:
**DE FR GB**

(56) References cited:
**DE-A-2 917 843**
**FR-A-1 269 267**
**GB-A- 632 021**
**US-A-2 162 689**
**US-A-2 565 427**

(73) Proprietor: **C. van der Lely N.V.**
**Weverskade 10 P.O. Box 26**
**NL-3155 ZG Maasland (NL)**

(72) Inventor: **Van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to a device for spreading granular and/or powdery material, comprising a distribution member and drive means for driving the distribution member which drive means comprises a circulating, flexible member which runs over two wheels one of which is removable from an operative position in the drive means for replacement by another wheel of different size.

A device of this kind is known from the U.S. Patent 2,162,689.

In this known construction the flexible member is a chain.

The object of the invention is to provide a more simple construction which can be easily controlled.

According to the invention the flexible member comprises a belt or a rope and both of the wheels are replaceable by other wheels of different diameters and/or are interchangeable with each other as being of different diameters whereby the replaceable wheels are slidable on and removable from shafts and are located on the opposite side of the device to that which is provided with fastening members by which the device can be coupled with the three point lifting device or the like of a tractor or similar vehicle.

Owing to the belt or rope, the drive of the distribution member can be advantageously adjusted through the drive means in a manner such that the distribution member can be optionally driven with either one of at least two different speeds. A belt or rope can be readily fitted and removed for replacing an exchangeable wheel around which the belt or rope passes. The wheels can be changed easily as they are located at the side of the drive opposite the side having the members with which the device is connectable to a tractor or like vehicle. Hereby the wheels can be reached very easily from behind the device being connected to the tractor. Especially as being provided at the opposite side of the device having the fastening member the changeable wheels have the advantage not to be heavier than is necessary for their driving function so that the device itself is as light as possible and the hopper can be loaded to a good extent also with the coupling of the device to a smaller tractor. Moreover, a belt or a rope can be effectively used, for example, in agricultural machines without the mounting and dismounting operations for the belt or rope requiring complicated manipulations for exchanging the wheel. Particularly in agricultural machines a belt or a rope does not require specific precautions to avoid soiling, and it is not excessively liable to damage. An advantageous construction is obtained when the exchangeable wheel is slidably and releasably arranged on a shaft.

A satisfactory structure is obtained when the flexible member is a V-belt.

In a preferred embodiment, the drive means comprises at least two flexible members located side by side and passing around one piece wheels. At least one of the shafts of the wheels over which the flexible member runs may be provided with connecting means for connection to the power-take off shaft of a tractor or a similar prime mover and may be displaceable in a direction transverse of the normal intended direction of operative travel of the device. In this way the construction embodying the invention becomes particularly appropriate for use in agricultural implements whereby the tension of the flexible member can be adjusted while maintaining the coupling with the power take-off shaft.

In a device in accordance with the invention the other wheel shaft is journalled in a box in which the shafts of two distribution members are journalled, the two shafts being coupled with one another by gear wheel transmission members. In this way a constant speed ratio between the two distribution members is maintained, and the drive to the distribution members can be effectively transmitted by the belt or rope. An advantageous embodiment is obtained when the two distribution members are journalled in a gear box, the gear boxes being relatively fixedly coupled by a hollow beam in which a connecting shaft is accommodated which connects the transmission members in the gear boxes with one another.

For a better understanding of the present invention and to show how it may be carried into effect, reference will now be made, by way of example, to the accompanying drawings, in which:

Figure 1 is a front view of a spreader;

Figure 2 is an enlarged plan view of drive means for distribution members of the spreader of Figure 1; and

Figure 3 is a view of the drive means taken in the direction of the arrow III in Figure 2.

The spreader shown in the Figures comprises a frame 1 provided with a hopper 2. The spreader also comprises two distribution members 3 and 4 arranged below the hopper.

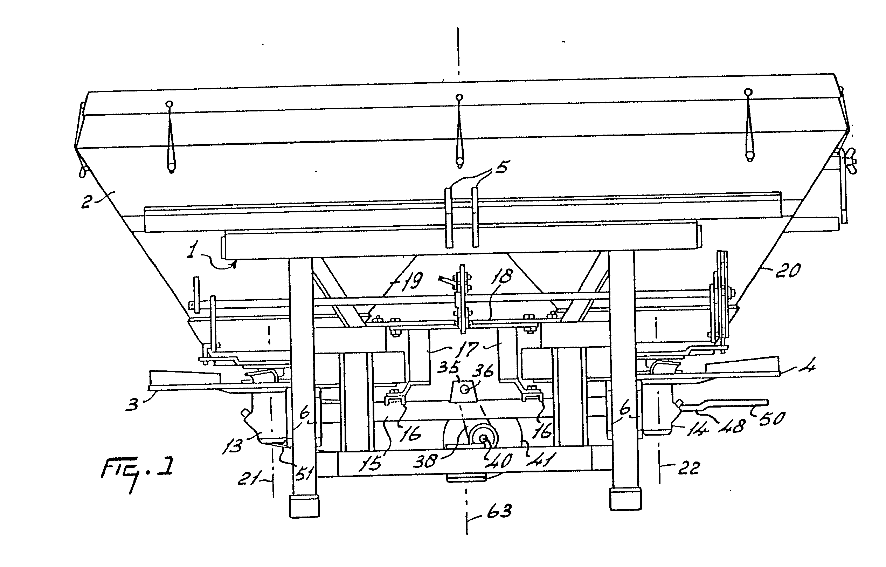

The frame has attachment means 5 by which it can be coupled with the top arm of the three-point lifting device of a tractor. The frame also has attachment means 6 with which the lower arms of the three-point lifting device of a tractor or a similar vehicle can be coupled. The distribution members 3 and 4 are mounted on shafts 11 and 12 which are journalled in gear boxes 13 and 14 respectively. The gear boxes 13 and 14 are rigidly interconnected by a beam 15 which, in this embodiment, is a hollow, box-section beam. The hollow beam 15 is provided with supports 16 fastened, as is shown in Figure 1, to supporting beams 17 connected with a fastening plate 18. The fastening plate 18 is arranged between the two delivery spouts 19 and 20 of the hopper 2, below which are located the distribution members 3 and 4, as will be apparent from Figure 1. The distribution members 3 and 4 are rotatable about the axes 21 and 22 of the shafts 11 and 12, these axes constituting rotary axes for the distribution members. The rotary axes 21 and 22 preferably extend vertically during operation or at least substantially perpendicular to the ground over which the spreader is travelling. The distribution members will thus move parallel to the surface over which the material is to be spread. The rotary axes 21 and 22 are located in a common plane transverse of and preferably perpendicular to the normal direction of operative travel 25 of the device. In the illustrated embodiment, the rotary axes 21 and 22 coincide in a manner not shown in detail with the centre lines of the delivery spouts 19 and 20.

Each of the shafts 11 and 12 is provided with a bevel gear wheel 23 which is drivably in mesh with a bevel gear wheel 24. The two bevel gear wheels 24 in the respective gear boxes 13 and 14 are coupled together by a coupling shaft 26. The gear wheels 23 and 24 in the gear boxes 13 and 14 and the coupling shaft 26 constitute gear wheel transmission members which couple the distribution members with one another and maintain them in their relative positions, thus ensuring equal rotation of the two distribution members 3 and 4.

A horizontal wheel shaft 30 is journalled in the gear box 13, this shaft 30 being at the same level as the coupling shaft 26. With respect to the direction 25, the wheel shaft 30 projects from the gear box 13 to the rear. The shaft 30 carries an exchangeable pulley wheel 31 having a hub 32. The hub 32 and the wheel shaft 30 are provided with interengaging splines 33 so that the pulley wheel 31 is prevented ·from rotating about the shaft 30, but can be slid along the shaft 30 and be slipped from and onto it. Displacement of the pulley wheel 31 is prevented by an easily operable fastening means, for example a quick-action clip 34 that can be quickly applied to and removed from the shaft 30.

The hollow beam 15 is provided with two upwardly extending lugs 35 to which a shaft 36 is rigidly secured. A sleeve 37, provided with a carrying arm 38, is rotatable about the shaft 36. At the end of the carrying arm 38 away from the sleeve 37 there is a bearing 39 for a wheel shaft 40. On the wheel shaft 40 is arranged a pulley wheel 41. The pulley wheel 41 has a splined hub 42 which engages splines 43 on the shaft 40 so that the hub 42 and hence the pulley wheel 41 are slidable on the shaft 40 for mounting or removal, as the case may be. The pulley wheel 41 is rotatably coupled with the shaft 40 by the splines. Displacement of the pulley wheel 41 with respect to the shaft 40 is prevented by a quick-action clip 44 or another similar fastening member that can be operated without tools.

A shaft 45 is rotatably journalled in the arm 38 and has a tapped hole 46 receiving a screwthreaded end 47 of a screw spindle 48. The screw spindle 48 is rotatably journalled in a support 49 fastened to the gear box 14 and it can be rotated by means of a cranked portion 50 at one end. The screw spindle 48 is located at the same level as the hollow beam 15 and extends with the latter substantially horizontally in a direction transverse of the direction 25.

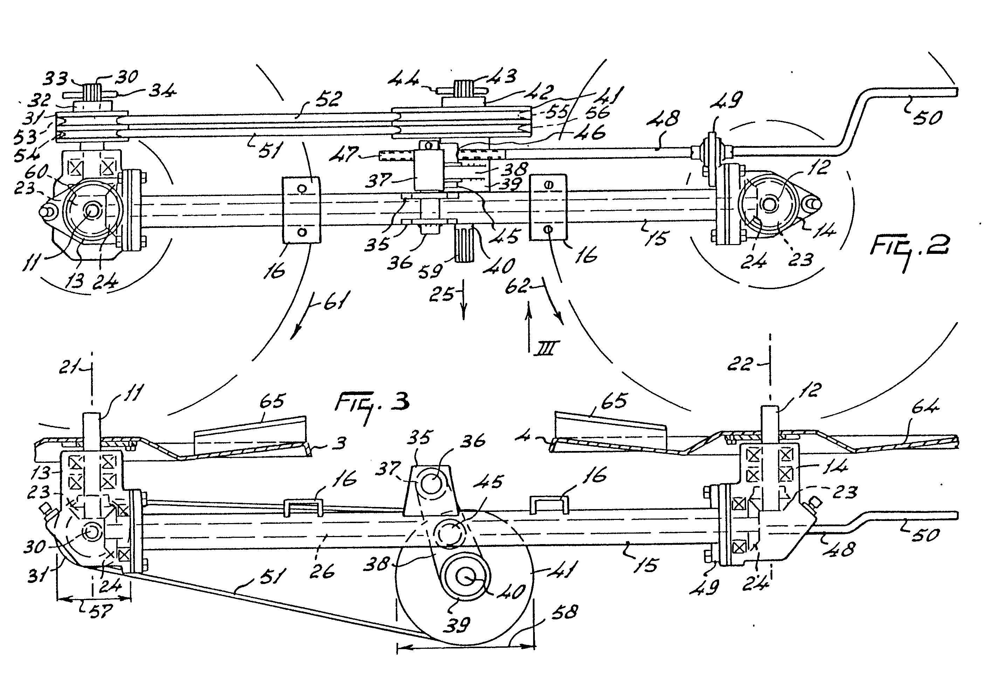

The pulley wheels 31 and 41 are coupled with one another by flexible endless connecting members 51 an d 52 in the form of two V-belts. These V-belts 51 and 52 are located side by side in grooves 53 and 54 in the integral pulley wheel 31 and in grooves 55 and 56 in the integral pulley wheel 41. The pulley wheels 31 and 41 shown in Figures 2 and 3 have diameters 57 and 58, the diameter 58 being twice the diameter 57.

For use, the spreader is attached to the lifting device of a tractor or a similar vehicle by coupling the fastening means 5 and 6 with the arms of the lifting device. A splined input end 59 of the shaft 40 is connected with an intermediate shaft, which is linked to a power take-off shaft of the tractor. Material to be spread is loaded into the hopper 2 from which, in operation, it is supplied to the distribution members 3 and 4, which are rotated from the shaft 40. Drive for this purpose is transmitted from the tractor to the shaft 40 on which the pulley wheel 41 is rotatably fixed. The flexible transmission members 51 and 52 transmit the drive to the pulley wheel 31 from the pulley wheel 41 and hence to the shaft 30. The shaft 30 carries a bevel gear wheel 60 which is arranged in the gear box 13 and meshes with the gear wheel 24. The gear wheel 24 drives the gear wheel 23 so that the shaft 11 and the distribution member 3 are rotated about the rotary axis 21. From the gear wheel 24 in the gear box 13 the other gear wheel 24, in the gear box 14, is rotated via the shaft 26. Since this other gear wheel 24 is coupled with the other gear wheel 23 in the gear box 14, the shaft 12 and the distribution member 4 are also rotated. The distribution members 3 and 4 are thus rotated in the direction of the arrows 61 and 62, that is, in opposite senses with their adjacent sides moving in the travel direction 25.

The material supplied to the distribution members 3 and 4 is received from the delivery spouts 19 and 20 at a place such that each of the distribution members spreads the material during travel on a strip of land extending equally on both sides, of the vertical plane 63 containing the longitudinal centre line of the device. In this way the two distribution members will simultaneously spread the material over the same area. The distribution members 3 and 4 are disposed symmetrically with respect to each other and the supply of the material to the distribution members occurs symmetrically about the plane 63. Therefore the two distribution members will spread the material symmetrically about the plane 63, which provides a very advantageous distribution pattern. Thanks to this symmetrical distribution by the two distribution members, in particular, on the same strips of land the width of the strips receiving the material can be set by modifying the speed of rotation of the distribution members 3 and 4 about their rotary axes 21 and 22. This modification of the rotary speed can be simply carried out by varying the driving speed of the shaft 30 by replacing at least one of the pulley wheels 31 or 41 by a pulley wheel of different diameter or by interchanging these pulley wheels.

In the illustrated embodiment, the two pulley wheels 31 and 41 can be readily removed from their shafts 30 and 40 respectively by removing the quick-action clips 34 and 44 so that the pulley wheels can be taken from the shafts or slipped onto them as the case may be. The speed of rotation of the distribution members can be varied in a simple manner by interchanging the pulley wheels 31 and 41 so that the pulley wheel 41 is on the shaft 30 and the pulley wheel 31 on the shaft 40.

In the illustrated embodiment the diameter of the pulley wheel 41 is twice that of the pulley wheel 31. When the pulley wheels are interchanged, from the positions shown, the speed of rotation of the distribution members, for the same speed of the shaft 40, is reduced to a quarter.

An advantageous embodiment is obtained when apart from the two pulley wheels 31 and 41, for example, two further pulley wheels are provided. For example, the pulley wheels 31 and 41 may have diameters of 90 to 180 mms respectively. By supplying two further pulley wheels which are, for example, 140 and 150 mms in diameter, any one of a large number of rotary speeds of the distribution members 3 and 4 may be chosen in a range, say, between 270 and 1080 rev/min, the shaft 40 being driven from the power take-off shaft with 570 rev/min. With a speed of 570 rev/min of the power take-off shaft the pulley wheels shown and the further pulley wheels of 140 and 150 mms can drive the distribution members at will with any one of the rotary speeds of 270, 324, 347, 420, 450, 504, 574, 648, 694, 840, 900 or 1080 rev/min. The interchange of the pulley wheels 31 and 41 among one another or with the other pulleys can be carried out in a simple manner by releasing the quick-action clips 34 and/or 44 without using tools and by slipping a different pulley wheel on the axle 30 and/or 40 and remounting the clips 34 and/or 44.

In order to tension the belts 51 and 52 correctly when the pulley wheels are exchanged, the shaft 40 can be displaced in a direction substantially parallel to the line between the axes of the shafts 30 and 40. Owing to the horizontal position of the shaft 36 the shaft 40 is displaceable parallel to itself in a direction transverse of the direction 25. Adjustment of the shaft 40 is achieved by turning of the carrying arm 38 about the centre line of the shaft 36. This is done by turning the screw spindle 48 which is rotatable in the support 49, but not slidable. The screwthreaded end 47 will then turn in the tapped hole 46 so that the arm 38 is turned about the pivotal shaft 36. Thus, by turning the cranked end portion 50 about the longitudinal axis of the screw spindle in one direction or the other the shaft 40 can be moved towards or away from the shaft 30 in order to obtain the correct tension of the belts 51 and 52.

The screw spindle 48 is positioned so that the portion 50, serving as a handle, can be easily grasped from the side of the spreader. The belts 51 and 52 and the pulley wheels 31 and 41 of the illustrated embodiment are located, with respect to the direction 25, behind the transmission members accommodated in the hollow beam 15 and the gear boxes 13 and 14 so that the pulley wheels are easily accessible from the rear of the spreader, that is to say, the side opposite the side where the spreader is coupled by the fastening members 5 and 6 with the lifting device. The flexible members 51 and 52 and the pulley wheels 31 and 41 thus form parts of driving means located opposite the side of the device to be coupled with a prime mover of the device.

Although in the embodiment described two pulley wheels 31 and 41 are shown, it is possible, for example, for belt pulleys with belts or other discs with flexible members to be employed as alternatives. Such transmissions, in particular V-belt transmissions can be easily employed, for example, in agricultural implements such as the fertilizer dispenser shown in the Figures. The belts 51, 52 and the pulley wheels 41 and 31 can be readily removed and remounted for an optional drive of the distribution members 3 and 4 with one of the various speeds.

**Claims**

1. A device for spreading granular and/or powdery material, comprising a distribution member (3, 4) and drive means for driving the distribution member (3, 4), which drive means comprises a circulating, flexible member (51) which runs over two wheels (31, 41), one of which is removable from an operative position in the drive means for replacement by another wheel of different size, characterized in that the flexible member (51) comprises a belt or rope and both of the wheels (31, 41) are replaceable by other wheels of different diameters and/or are interchangeable with each other as being of different diameters, whereby the replaceable wheels are slidable on and removable from shafts (30, 40) and are located on the opposite side of the device to that which is provided with fastening members (5, 6) by which the device can be coupled with the three-point lifting device or the like of a tractor or similar vehicle.

2. A device as claimed in claim 1, characterized in that the drive means comprises at least two flexible members (51, 52) located side by side and passing around one-piece wheels (31, 41).

3. A device as claimed in claim 1 or 2, characterized in that one of the shafts on which one of the wheels is mounted is provided with connecting means (59) for connection to the power take-off shaft of the tractor or the similar vehicle, this shaft is displaceable in a direction transverse of the normal intended direction or operative travel of the device.

4. A device as claimed in claim 3, characterized in that the movable shaft (40) is arranged on a carrying arm (38), which is pivotable about a pivotal shaft fastened to a frame of the device, the movable shaft (40) is coupled with an adjusting device arranged on the frame, the adjusting device comprising a screw spindle shaft (48) which is rotatably journalled in the frame and has a screw threaded end (47) engaging a screwthreaded sleeve (46) which is arranged on the carrying arm (38).

5. A device as claimed in claim 3 or 4, characterized in that the other wheel shaft (30) is journalled in a box (13, 14, 15) in which the shafts (11, 12) of two distribution members are journalled, the two shafts (11 and 12) being coupled with one another by gear wheel transmission members.

6. A device as claimed in claim 5, characterized in that the two distribution members (3, 4) are each journalled in a gear box (13, 14) the gear boxes being relatively fixedly coupled by a hollow beam (15) in which a connecting shaft (26) is accommodated which connects the transmission members in the two gear boxes with one another.

7. A device as claimed in claim 6, characterized in that the or each wheel shaft (30, 40) extends at least substantially parallel to the normal intended direction of operative travel of the device and to the rear of the hollow beam.

8. A device as claimed in any one of the claims 5—7, characterized in that the two distribution members (3, 4) are arranged and adjoined to outlets (19, 20) of a hopper (2) in a manner such that both of them spread the material across a common strip of land during operative travel of the device.

9. A device as claimed in any one of the claims 5—8, characterized in that the distribution members (3, 4) are movable at least substantially parallel to the plane on which the material is spread, whereby during operation of the device the two distribution members spread material in relatively symmetrical fashion.

## Patentansprüche

1. Streuvorrichtung für körniges und/oder pulvriges Streugut, mit einem Verteiler (3, 4) und Antriebsmitteln zum Antrieb des Verteilers (3, 4), wobei die Antriebsmittel ein umlaufendes flexibles Glied (51) aufweisen, das über zwei Radscheiben (31, 41) umläuft, von denen eine aus der Arbeitslage im Antrieb entfernbar und durch eine Radscheibe anderer Grösse ersetzbar ist, dadurch gekennzeichnet, dass das flexible Glied (51) einen Riemen oder ein Seil aufweist, und dass beide Radscheiben (31, 41) durch andere Radscheiben unterschiedlichen Durchmessers zu ersetzen und/oder, bei untereinander unterschiedlichem Durchmesser, gegeneinander austauschbar sind, wobei die auswechselbaren Radscheiben auf Wellen (30, 40) verschiebbar und abnehmbar und auf derjenigen Seite der Vorrichtung angeordnet sind, die der mit den Anschlüssen (5, 6) zur Verbindung mit der Dreipunkt-Hebevorrichtung eines Schleppers oder eines ähnlichen Fahrzeuges versehenen Seite der Vorrichtung gegenüberliegt.

2. Gerät nach Anspruch 1, dadurch gekennzeichnet, dass die Antriebsmittel mindestens zwei benachbart angeordnete flexible Glieder (51, 52) aufweisen, die über einstückig ausgebildete Radscheiben (31, 41) umlaufen.

3. Gerät nach Anspruch 1 oder 2, dadurch gekennzeichnet, dass eine der Wellen, auf der eine der Radscheiben angeordnet ist, mit einem Anschluss (59) zur Verbindung mit der Zapfwelle des Schleppers oder des ähnlichen Fahrzeuges versehen ist, wobei diese Welle quer zur Arbeitsrichtung des Gerätes verstellbar ist.

4. Gerät nach Anspruch 3, dadurch gekennzeichnet, dass die verstellbare Welle (40) auf einem Tragarm (38) angeordnet ist, der um eine an dem Rahmen des Streugerätes befestigte Schwenkachse schwenkbar ist, und dass die verstellbare Welle (40) mit einer auf dem Rahmen befindlichen Justiervorrichtung gekuppelt ist, die eine Gewindespindel (48) aufweist, die drehbar in dem Rahmen gelagert ist und ein Gewindeende (47) hat, das in eine mit Gewinde versehene Buchse (46) eingreift, die auf dem Tragarm (38) angeordnet ist.

5. Gerät nach Anspruch 3 oder 4, dadurch gekennzeichnet, dass die Welle (30) der anderen Radscheibe in einem Gehäuse (13, 14, 15) gelagert ist, in dem die Wellen (11, 12) der beiden Verteiler gelagert sind, wobei die beiden Wellen (11 und 12) miteinander über Zahnradgetriebe gekuppelt sind.

6. Gerät nach Anspruch 5, dadurch gekennzeichnet, dass die beiden Verteiler (3, 4) in je einem Getriebegehäuse (13, 14) gelagert sind, wobei die Getriebegehäuse (13, 14) fest miteinander durch einen Hohlbalken (15) verbunden sind, in dem eine Verbindungswelle (26) gelagert ist, welche die in den beiden Getriebegehäusen befindlichen Getriebeglieder miteinander verbindet.

7. Gerät nach Anspruch 6, dadurch gekennzeichnet, dass die ober jede Radscheibenwelle (30, 40) zumindest im wesentlichen parallel zu der normalen Arbeitsrichtung des Gerätes und zu der Rückseite des Hohlbalkens verläuft.

8. Gerät nach einem der Absprüche 5 bis 7, dadurch gekennzeichnet, dass die beiden Verteiler (3, 4) derart angeordnet und Auslassöffnungen (19, 20) eines Vorratsbehälters (2) derart zugeordnet sind, dass beide das Streugut während der Arbeitsfahrt über denselben Geländestreifen ausstreuen.

9. Gerät nach einem der Ansprüche 5 bis 8, dadurch gekennzeichnet, dass die Verteiler (3, 4) wenigstens annährend parallel zu der Streuebene bewegbar sind, wobei die beiden Verteiler das Streugut während der Arbeit des Gerätes annährend symmetrisch zueinander ausstreuen.

## Revendications

1. Dispositif d'épandage de matière granuleuse et/ou pulvérulente, comprenant un organe de distribution (3, 4) et un moyen d'entraînement pour entraîner l'organe de distribution (3, 4) ce moyen d'entraînement comprenant un élément souple circulant (51) qui passe sur deux poulies (31, 41), l'une desquelles est amovible à partir d'une position de travail du moyen d'entraînement pour être remplacé par une autre poulie de taille différente, caractérisé en ce que l'élément souple (51) comprend une courroie ou un câble et en ce que l'une et l'autre des deux poulies (31, 41) peuvent être remplacées par d'autres poulies de diamètres différents et/ou sont interchangeables entre elles en raison de leurs diamètres différents, les roues remplaçables étant montées coulissantes et amovibles sur des axes (30, 40) et étant disposées sur le côté du dispositif opposé à celui qui est muni d'éléments d'attelage (5, 6) au moyen desquels le dispositif peut être attelé au système de relevage en trois points ou autre dispositif analogue d'un tracteur ou d'un véhicule similaire.

2. Dispositif selon la revendication 1, caractérisé en ce que le moyen d'entraînement comprend au moins deux éléments souples (51, 52) disposé côté à côte et passant autour de poulies (31, 41) faites chacune d'une seule pièce.

3. Dispositif selon la revendication 1 ou 2, caractérisé en ce qu'un des arbres sur lequel est montée une des poulies est munie de moyens de raccordement (59) pour être relié à l'arbre de prise de force du tracteur ou véhicule similaire, cet arbre étant déplaçable dans une direction transversale au sens de marche normal prévu pour le fonctionnement du dispositif.

4. Dispositif selon la revendication 3, caractérisé en ce que l'arbre déplaçable (40) est disposé sur un bras porteur (38) qui est susceptible de pivoter autour d'un arbre formant pivot fixé à un chassis du dispositif, l'arbre déplaçable (40) étant accouplé à un dispositif de réglage disposé sur le chassis, le dispositif de réglage comprenant un arbre fileté (48) qui tourne dans des paliers ménagés sur le chassis et possède une extrémité filetée (47) s'engageant dans une douille filetée (46) disposée sur le bras porteur (38).

5. Dispositif selon la revendication 3 ou 4, caractérisé en ce que l'autre arbre (30) de poulie tourne dans un boîtier (13, 14, 15) dans lequel sont logés les paliers des arbres (11, 12) de deux organes de distribution, les deux arbres (11, 12) étant accouplés entre eux par des organes de transmission à engrenages.

6. Dispositif selon la revendication 5, caractérisé en ce que les deux organes de distribution (3, 4) ont chacun leur palier dans une boîte d'engrenages (13, 14), les boîtes d'engrenages étant accouplées de manière relativement fixe par une poutre creuse (15) dans laquelle est logé un arbre de liaison (26) qui relie entre eux les organes de transmission dans les deux boîtes d'engrenages.

7. Dispositif selon la revendication 6, caractérisé en ce que l'arbre de poulie ou chaque arbre de poulie (30, 40) s'étend au moins sensiblement parallèlement au sens de marche normal prévu pour le fonctionnement du dispositif, et à l'arrière de la poutre creuse.

8. Dispositif selon l'une quelconque des revendications 5—7, caractérisé en ce que les deux organes de distribution (3, 4) sont disposés en regard des orifices de sortie (19, 20) d'une trémie (2) de telle manière que chacun d'eux épande la matière sur une même bande de terrain au cours de l'avancement du dispositif en travail.

9. Dispositif selon l'une quelconque des revendications 5—8, caractérisé en ce que les organes de distribution (3, 4) sont mobiles de manière tout au moins sensiblement parallèle au plan sur lequel la matière est épandue, ceci ayant pour effet que, lors du fonctionnement du dispositif, les deux organes de distribution épandent la matière d'une façon relativement symétrique.

FIG.1

0 085 449

FIG.2

FIG.3